# EUROPÄISCHE PATENTSCHRIFT

(11) **EP 2 463 980 B1**
(45) Veröffentlichungstag und Bekanntmachung des Hinweises auf die Patenterteilung: **28.11.2018**
(21) Anmeldenummer: 11009760.7
(22) Anmeldetag: 10.12.2011
(51) Int. Cl.: H02J 3/38, H02J 3/16

(54) **Betrieb eines Energieerzeugers in einem Energieversorgungsnetz**
Operation of an energy producer in an energy supply network
Fonctionnement d'un générateur d'énergie dans un réseau d'alimentation en énergie

(30) Priorität: 11.12.2010 DE 102010054233
(43) Veröffentlichungstag der Anmeldung: 13.06.2012
(73) Patentinhaber: BOB Holding GmbH, 97332 Volkach (DE)
(72) Erfinder: Beck, Bernhard, 97332 Volkach , Dimbach (DE)
(74) Vertreter: FDST Patentanwälte

(56) Entgegenhaltungen:
- EP-A1- 1 508 951
- EP-A2- 1 841 037
- US-A1- 2007 114 796
- US-A1- 2010 094 474

## Beschreibung

Die Erfindung betrifft ein Verfahren und eine Vorrichtung zum Betrieb mindestens eines Energieerzeugers, der insbesondere als regenerativer Energieerzeuger ausgestaltet ist, in einem Energieversorgungsnetzes mit über einen ersten und einen zweiten Transformator verbundenen Spannungsebenen. Bei den verschieden hohen Spannungsebenen handelt es sich um drei zusammenhängende Spannungsebenen, deren oberen beiden Spannungsebenen über einen ersten Transformator und deren unteren beiden Spannungsebenen über den zweiten Transformator miteinander verbunden sind.

In der Praxis der öffentlichen Stromversorgung werden im Energieversorgungs¬netz je nach Versorgungsebene, die zum Beispiel in Deutschland von einer Höchstspannungsebene größer 220KV und/oder eine Hochspannungsebene mit 33KV bis 220KV über eine Mittelspannungsebene zwischen 1KV und 33KV bis zu einer Niederspannungsebene bis 1KV reicht, von den Energieversorgern oder Netzbetreibern mehr oder weniger enge Grenzen für die Strom- und Spannungsqualität in Bezug auf den Blindleistungsanteil (Blindleistungsbezug oder Blindleistungslieferung) der Stromlieferanten und der Stromverbraucher, repräsentiert durch den cos phi Wert im Zeigerdiagramm von Strom und Spannung, gesetzt. Vielfach, insbesondere auch in Deutschland, beträgt der zulässige Wert von cos phi für einen sanktionslosen Blindleistungsbezug oder eine Blindleistungseinspeisung 0,95. Diese Grenzsetzung dient der Stabilisierung der Netze, um eine Überspannung, die zu einer Zerstörung von angeschlossenen Verbrauchern führen kann, und eine Unterspannung zu vermeiden, die zu einem Versagen von Verbrauchern führen kann. Als Regulativ zur Einhaltung der gesetzten cos phi Werte dient der Preis. So wird eine Einspeisung oder ein Bezug von Blindleistung außerhalb der von dem Energieversorger oder Obernetzbetreiber vorgegebenen Bandbreite für den cos phi mit erheblichen Straf- oder Aufzahlungen belegt.

Anlagen zur Erzeugung regenerativer Energie sind vielfältig bekannt. Jede Photovoltaikanlage (PV-Anlage) erzeugt einen Gleichstrom, der mittels eines Wechselrichters in einen Wechselstrom umgewandelt und bei geeigneten Bedingungen in ein Energieversorgungsnetz eingespeist wird. Als Wechselrichter können sowohl elektronische Geräte als auch elektromechanische Umformer eingesetzt werden. Unter Wechselrichter sind dabei alle Vorrichtungen zu verstehen, welche aus einer Gleichspannung eine Wechselspannung erzeugen können. So erzeugen Windkraftanlagen zwar unmittelbar einen Wechselstrom. Dieser ist jedoch über einen Frequenzumformer an die Verhältnisse des öffentlichen Versorgungsnetzes (Energieversorgungsnetz) anzupassen. Diese Frequenzumformer umfassen ebenfalls Wechselrichter und sollen als Mittel mit umfasst sein.

Die elektronischen Komponenten eines Wechselrichter, ebenso wie auch die Kombination einer Gleichstrommaschine mit einem Synchrongenerator als mechanischer Wechselrichter, erlauben die Einstellung eines gewünschten cos phi Wertes in Bezug zur Leistung. Dies geschieht bei den meisten PV-Anlagen durch einen cos phi - Zeiger, über den ein festes Verhältnis von eingespeister Leistung zu eingespeister oder bezogener Blindleistung eingestellt werden kann. So wird der Regeleinheit z. B. vorgeschrieben, jegliche in das Netz eingespeiste Leistung mit einem cos phi von 0,97 einzustellen.

Aus der US 2010/094474 A1 ist ein System mit mehreren Windparkanlagen zum Anschluss an ein elektrisches Energieversorgungsnetz bekannt. Die einzelnen Windparkanlagen speisen die erzeugte Energie auf eine Sammelschiene, die an einem Ende mit dem Versorgungsnetz verbunden ist. Die interne Regelvorrichtung für das Sytem von Windparks umfasst Spannungsmessungen und deren Vergleich zu Referenzwerten, sowie Möglichkeiten eine Blindleistungsabgabe oder -entnahme durch einzelne Windturbinen zu steuern. Ziel der bekannten Anordnung ist es, die Verluste des Gesamtsystem zu optimieren, indem Blindleistung zwischen den einzelnen Windparks oder auch zwischen einzelnen Turbinen desselben Windparks verschoben wird.

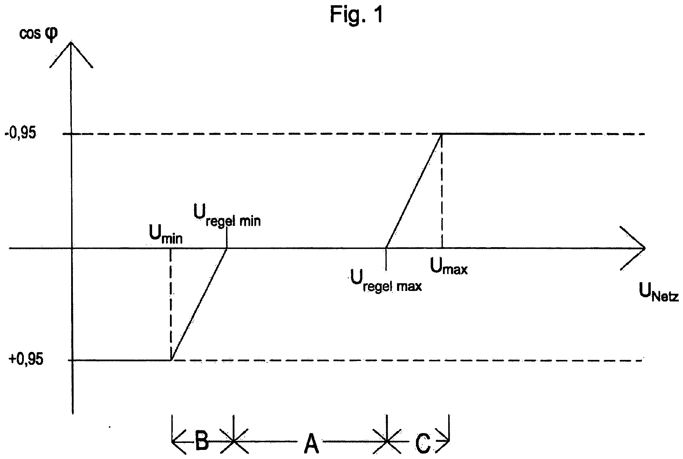

Aus der Deutschen Offenlegungsschrift DE 199 61 705 A1 ist beispielsweise ein Wechselrichter für eine Photovoltaikanlage bekannt, mittels dessen eine Solaranlage an ein Energieversorgungsnetz angeschlossen werden kann und der eine Regelungseinheit zur dynamischen Berechnung eines Kompensationsstromes zur Kompensation von Oberschwingungen und Blindleistung im Netz aufweist. Durch den Betrieb des Wechselrichters mit der Regelungseinheit soll die Netzspannungsqualität in dem Energieversorgungsnetz verbessert werden. Die Regelungseinheit berechnet einen Kompensationsstrom-Sollwert aufgrund eines gemessenen Netzspannungswertes. Dabei wird das Messglied der Netzspannungsmessung an demjenigen Verknüpfungspunkt angeordnet, an dem der Wechselrichter die Energie in das Netz einspeist.
Bei größeren und modernen Anlagen wird der cos phi Wert nicht notwendig fest vorgegeben, sondern kann im Betrieb nach einem Diagramm entsprechend der Fig. 1 je nach den augenblicklichen Erfordernissen dynamisch eingestellt werden. Dort ist ein einzustellender cos phi-Wert am Ausgang des Wechselrichters über die Netzspannung aufgetragen. Die Ausgangsspannung (UNetz) zur Einspeisung in das Netz darf nur innerhalb eines Bereiches zwischen einem minimalen Wert (Umin) und einem maximalen Wert Umax variieren. Außerhalb dieses vom Energieversorger zugelassenen Bereichs der Einspeisung ins Netz mit einem cos phi von z. B. maximal 0,95 sollte die PV-Anlage nicht betrieben werden. Innerhalb dieses zulässigen Bereichs liegt ein engerer Bereich zwischen einer minimalen Regelspannung (Uregel min) und einer maximalen Regelspannung (Uregel max), in welchem reine Leistung ohne eine Blindleistungskomponente an das Netz abgegeben werden kann. In der Mitte dieses engeren Bereichs liegt die Sollspannung (Usoll).

In der Regel sind Energieversorger, insbesondere in deren Vertragsverhältnis zum Obernetzbetreiber (e. g. Atomkraftwerk, Kohlekraftwerk etc.) als Energielieferant vertraglich dazu verpflichtet, einen Blindleistungsbezugswert von cos phi 0,95 nicht zu überschreiten, um die Spannungsstabilität in dem überregionalen Obernetz sicher zu stellen. Dies bedeutet, dass in dem Beispiel ein cos phi Wert von 0,94 eine Überschreitung des Bezugs darstellt, wohingegen eine cos phi Wert von 0,96 ein Unterschreitung, also ein nicht Ausnutzen des maximal erlaubten Bezugs darstellt. Ein Bezug oder die Lieferung von Blindleistung ist aber häufig in den unteren Netzen erforderlich, um einen Spannungsanstieg durch die Einspeisung von Solar- und Windkraftstrom zu kompensieren bzw. um einen Spannungsabfall durch ausfallende Lieferung von alternativ erzeugter Energie oder das Anfahren von Maschinen zu kompensieren.

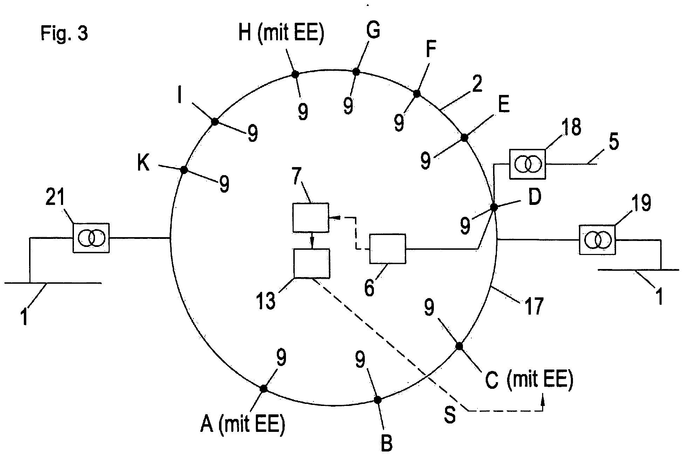

Zur näheren Erläuterung der Problematik und der sich daraus ergebenden Aufgabe wird ein Beispiel anhand der Fig. 3 beschrieben. In einem Mittelspannungsversorgungsnetz von 20kV werden mehrere Ortschaften A bis K unterschiedliche Größe über eine Ringleitung 17, die an zwei einspeisende Transformatoren 19 und 21 angeschlossen ist, mit Energie auf einer 0,4kV-Ebene versorgt. Die Ortschaften A bis K werden stabil mit Strom auf der 0,4kV-Ebene versorgt. Maßnahmen sind erforderlich, wenn einer der Transformatoren, z. B. der Transformator 21 wegen Wartungsarbeiten oder Defekt ausfällt und vom Netz zu nehmen ist. Der verbleibende Transformator 19 muss nun alle Ortsschaften A bis K mit Energie versorgen.

Um auch bei den entfernt liegenden Ortschaften E und D eine ausreichende Spannung bereitstellen zu können, muss durch die für das Versorgungsnetz zuständige Leitwarte die Ausgangsspannung am Transformator 19 erhöht werden. Das bedeutet für die nahe liegenden Ortschaften A und K, dass diese am oberen Rand der gewünschten Spannungsbandbreite versorgt werden. Für die entfernten Ortschaften bedeutet dies, dass diese eher am unteren Rand der Spannungsbandbreite versorgt werden. Befindet sich in der Ortschaft K eine größere Photovoltaikanlage, so wird - entsprechend der zuvor beschriebenen Fig. 1 - deren Regeleinrichtung bestrebt sein die PV-Anlage zurück in den Bereich B zu führen, da die Anlage aufgrund der erhöhten Netzspannung im Bereich der rechten Flanke, also im Bereich betrieben wird. Da die PV-Anlagen¬regelung den ausgefallenen Transformator 21 nicht erkennt, wird im Ergebnis die Anlagenregelung auf ein Absenken der Netzspannung und die Leitwarte z. B. durch entsprechende Schaltvorgänge an Transformatoren auf ein Anheben der Netzspannung hinwirken, insbesondere durch eine Änderung des Übersetzungsverhältnisses. Diese gegengesetzt wirkenden Eingriffe in das Stromversorgungsnetz führten bereits dann regelmäßig zu instabileren Netzen, als noch keine regenerativen Energieerzeuger im derzeitigen Ausmaß vorhanden waren.

Ausgehend von diesen Überlegungen liegt der Erfindung die Aufgabe zugrunde, einen Beitrag zur Erhöhung der Versorgungsstabilität in einem elektrischen Energieversorgungsnetz zu leisten.

Diese Aufgabe wird bei der Vorrichtung erfindungsgemäß gelöst durch
- eine Messeinrichtung, die den Blindleistungsübergang zwischen den beiden oberen Spannungsebenen am ersten Transformator erfasst,
- ein Spannungsmessgerät, das die Spannung an einem ersten Netzverknüpfungspunkt der unteren Spannungsebene ermittelt,
- eine Recheneinrichtung welche die Höhe einer vom Energieerzeuger zu bedienenden Blindleistungsanforderung in Abhängigkeit des vom Spannungsmessgerät ermittelten Spannungswerts errechnet, um die auf der untersten Spannungsebene ermittelte Spannung innerhalb eines vorgebbaren Spannungsbereichs zu halten, und
- durch eine Regel- und Steuereinheit die anhand der errechneten Blindleistungsanforderung ein Mittel des Energieerzeugers für einen Blindleistungsbezug oder eine Blindleistungslieferung ansteuert.

Die Höhe einer von einem Energieerzeuger des Energieversorgungsnetzes bedienten Blindleistungsanforderung wird in Abhängigkeit des ermittelten Spannungswerts errechnet, um die auf der untersten Spannungsebene ermittelte Spannung innerhalb eines vorgebbaren Spannungsbereichs zu halten. Anhand der errechneten Blindleistungsanforderung wird ein Mittel des Energieerzeugers für einen Blindleistungsbezug oder eine Blindleistungslieferung angesteuert.

Unter dem Begriff Netzverknüpfungspunkt wird üblicherweise die Position der Zählstelle zwischen dem Verbraucher und dem Netz sowie zwischen dem Einspeiser und dem Netz verstanden. Vorliegend wird darüber hinaus auch jede Position innerhalb des öffentlichen Versorgungsnetzes sowie des Netzes der Verbraucher und der Einspeiser verstanden, an denen die Spannungsmessung vorgenommen wird.

Die Erfindung umfasst zusätzlich ein Verfahren zum Betrieb mindestens eines Energieerzeugers in einem elektrischen Energieversorgungsnetz mit mindestens drei verschieden hohen Spannungsebenen für die Versorgung von Verbrauchern mit elektrischer Energie, von denen die oberen beiden Spannungsebenen über einen ersten Transformator und die unteren beiden Spannungsebenen über einen zweiten Transformator miteinander verbunden sind, wobei der Energieerzeuger über einen Netzverknüpfungspunkt mit der unteren Spannungsebene oder mit der mittleren Spannungsebene verbunden ist,
- wobei ein Blindleistungsübergang zwischen den beiden oberen Spannungsebenen an den diese verbindenden ersten Transformator erfasst wird,
- wobei die Spannung an einem ersten Netzverknüpfungspunkt der untersten Spannungsebene ermittelt wird,
- wobei die Höhe einer vom Energieerzeuger zu bedienenden Blindleistungsanforderung in Abhängigkeit des ermittelten Spannungswerts errechnet wird, um die auf der untersten Spannungsebene ermittelte Spannung innerhalb eines vorgebbaren Spannungsbereichs zu halten, und
- wobei anhand der errechneten Blindleistungsanforderung ein Mittel des Energieerzeugers für einen Blindleistungsbezug oder eine Blindleistungslieferung angesteuert wird.

Das Verfahren und die Vorrichtung dienen dem Blindleistungsmanagement der Versorgungsebene mit dem Ziel einer möglichst ausgeglichenen Spannung innerhalb der jeweilig betrachteten Ebene, insbesondere unter Einhaltung eines vorgebbaren Blindleistungsbezugs aus dem Obernetz (obere Spannungsebene).

In der Regel bestehen die Mittel im Wesentlichen aus einem elektronischen oder einem elektromechanischen Wechselrichter. Diese Geräte haben aufgrund deren inhärent vorhandenen Bauteile, wie z. B. IGBT's bei den elektronischen Wechselrichtern beziehungsweise einer Erregerstromsteuereinrichtung bei einem Maschinensatz, die Möglichkeit, einen Blindleistungsbeitrag (VAr-Beitrag) zu leisten.

Es wird also eine ohnehin vorhandene Fähigkeit der Geräte zu einem weiteren Zweck genutzt, nämlich der Stabilisierung des Versorgungsnetzes. Dies geschieht in der Regel ohne Einbußen bei der Lieferung der Wirkleistung. Ein Wechselrichter von z. B. 1 MW (MVA) Nennleistung, der aufgrund der aktuellen Sonneneinstrahlung lediglich mit 0,6 MVA belastet ist, hat eine freie Kapazität zur Lieferung oder zum Bezug von Blindleistung in Höhe von 0,4 MVAr. Im Fall des Eingangs beschriebenen Beispiels, kann dieser Wechselrichter also unter Aussetzung seines üblichen Regelschemas nach der Figur 1 mit einem kapazitiven cos phi entsprechend einer Blindleistungseinspeisung betrieben werden, um einen Beitrag zur Spannungsanhebung zu leisten. Üblicherweise würde versucht werden, durch eine Spannungssenkung den Regelbereich des Wechselrichters einzuhalten.

Vorzugsweise wird die Betriebsführung des Wechselrichters durch die ihm inhärente Regeleinrichtung auf den maximalen Leistungspunkt MPP der Photovoltaikanlage oder der Windkraftanlage beibehalten. Zusätzlich sollte der Wechselrichter eine solche Blindleistungsmenge in die Versorgungsebene einspeisen oder aus dieser beziehen, die maximal der Differenz der aktuell gelieferten Leistung zur Nennleistung des Wechselrichters entspricht. Somit wird der Blindleistungsbetrag auf die zur Erreichung der Nennleistung des Wechselrichters verbleibende Leistung beschränkt, so dass die vom Energieerzeuger selbst generierte Energie nicht eingeschränkt oder reduziert wird. Die freie Leistungskapazität des Wechselrichters wird lediglich zur Erfüllung einer weiterer Funktion, nämlich die des Phasenschiebers oder Blindleistungslieferanten herangezogen.

Es kann auch vorgesehen sein, dass die Betriebsführung des Wechselrichters vorsieht, unter Umgehung der erforderlichen Aussetzung der ihm inhärenten Regeleinrichtung hin zu dem maximalen Leistungspunkt MPP einen vorgebbaren Blindleistungsanteil in die Versorgungsebene einzuspeisen oder aus dieser zu beziehen. Dieses ist vorteilhaft, wenn für den Anlagenbetreiber aufgrund der aktuellen Netzverhältnisse die Lieferung von Blindleistung zur Stabilisierung des Netzes zweckdienlicher ist, als Wirkleistung für den Antrieb von Maschinen oder den Betrieb von Klimaanlagen etc. bereitzustellen.

Ein besonders geeigneter Ort für die Platzierung der Spannungsmessvor-richtung ist am Ende einer Stichleitung oder in Bezug zu einem eine Ringleitung speisenden Netztransformator in der Mitte der Ringleitung oder bei mehreren einspeisenden Transformatoren in deren Nähe. Dort befinden sich die Verbraucher, die in der normalen Bezugsrichtung des Netzes die niedrigste Netzspannung zur Verfügung haben, wenn einer der Transformatoren, z.B. wegen Wartungsarbeiten, ausfällt. Aufgrund der vor diesen angeordneten anderen Verbrauchern, die einen marginalen Spannungsabfall bewirken, ist dort die verfügbare Spannung in der Regel am niedrigsten, wenn nicht ein Energieerzeuger oder -lieferant in der Nähe ist.

Die Bezeichnungen "am Ende einer Stichleitung und in Bezug zu einem eine Ringleitung speisenden Netztransformator in der Mitte der Ringleitung" sind dabei relativ zu sehen. Ist zum Beispiel eine Stichleitung mit zweihundert (200) Anknüpfungspunkten gegeben, so ist das Ende als ein Anknüpfungspunkt von den letzten 10%, also einer der letzten zwanzig (20) Anknüpfungspunkte zu sehen. Analog wären bei einer Ringleitung von zweihundert (200) Anknüpfungspunkten die jeweils zehn (10) links und rechts der Transformator-Verknüpfungspunkte liegenden Anknüpfungspunkte zu sehen.

Es wird generell der spannungssensibelste Netzverknüpfungspunkt, insbesondere unter der Hypothese eines Transformatorausfalls, gewählt. Dies kann auch eine andere Stelle sein, wenn dort z. B. ein Verbraucher vorgesehen ist, der schwere Maschinen mit hohem Anlaufstrom betreibt, die täglich häufig ein- und ausgeschaltet werden. Alternativ wird der Verbraucher mit der höchsten Schwankungsbreite beim Blindleistungsbezug ermittelt, während die Messung des Spannungswerts am Netzverknüpfungspunkt dieses Verbrauchers erfolgt.

Generell ist der spannungssensibelste Punkt geprägt durch die höchste Spannungsvariation in Bezug zu einer einspeisenden oder zu beziehenden elektrischen Leistung. Ferner kann die Spannungsvariation durch einen prozentualen Veränderungsbetrag und nicht durch die betrachteten absoluten Spannungswerte definiert werden. Dies ist bei Vorliegen einer Ringleitung häufig in der Mitte in Bezug zum Transformator zum nächst höheren Netz der Fall, das heißt an derjenigen Stelle, an der in beiden Richtungen die gleiche Entfernung zum Transformator besteht.

Die Betriebsführung des Wechselrichters zeichnet sich dadurch aus, dass eine gemessene Unterspannung unterhalb eines Schwellwerts zu einer Einspeisung von Blindleistung seitens des Wechselrichters führt. Eine drohende Überspannung, z. B. bei Erreichen eines oberen Schwellwerts führt zu einem Bezug von Blindleistung durch den mindestens einen Wechselrichter.

Eine großflächigere Überwachung des Spannungszustands auf dem Leitungsnetz der Versorgungsebene sieht vor, dass die Spannung an den Netzverknüpfungspunkten von mehreren Verbrauchern auf derselben Versorgungsebene ermittelt wird, und dass die Betriebsführung anhand der entsprechend mehreren Spannungswerte erfolgt. So kann bei Kenntnis mehrerer sensibler Stellen und insbesondere auch bei Vorliegen mehrerer regenerativer Energieerzeuger an geographisch weiter auseinanderliegenden Verknüpfungspunkten eine optimale Betriebsführung des Leitungsnetzzustands erreicht werden.

Bei Vorliegen von mehreren Energieerzeugern regenerativer Energie mit jeweils zugeordnetem Netzverknüpfungspunkt in dasselbe Versorgungsnetz ist es zweckmäßig, dass der zu liefernde Blindleistungsanteil auf die entsprechend mehreren Wechselrichter derart aufgeteilt wird, dass die beteiligten Wechselrichter in Summe möglichst verlustarm arbeiten. Die Eigenschaft verlustarm soll dabei derart verstanden werden, dass aus dem regenerativen Energieangebot, z. B. Sonne oder Wind, eine möglichst große Menge an Kilowattstunden in das Netz eingespeist werden kann. Dies ermöglicht eine effiziente Ausnutzung der verfügbaren Blindleistungskapazitäten. Aus demselben Grund ist es angebracht, dass derjenige Energieerzeuger bevorzugt zur Blindleistungseinspeisung oder zum Blindleistungsbezug herangezogen wird, der demjenigen Netzverknüpfungspunkt räumlich benachbart ist, an dem der Spannungswert ermittelt wird und der sich einem kritischen Wert nähert.

Zum Schutz des Wechselrichters und der Photovoltaikanlage weist die Steuervorrichtung einen Begrenzer auf, der den vorgegebenen Blindleistungsbetrag dahingehend reduziert anwendet, dass eine maximal zulässige Spannung am Ausgang des Wechselrichters nicht überschritten wird. Ebenso kann es zweckmäßig sei, die Steuervorrichtung mit der Möglichkeit zu versehen, den vorgegebenen Blindleistungsbetrag dahingehend angehoben anzuwenden, dass eine minimal zulässige Spannung am Eingang des Wechselrichters nicht unterschritten wird.

Die Steuereinrichtung enthält geeigneterweise einen Regelalgorithmus, der den Blindleistungsübergang unterhalb eines vorgegebenen Grenzwerts hält.

Als Energielieferant kommt auch ein Energiespeicher infrage, der aus einer Batteriebank bestehen kann. Auch ist ein Pumpspeicherkraftwerk oder dergleichen denkbar. Dieser Energiespeicher kann dann auf Anforderung Leistung oder auch Blindleistung aus der betreffenden Spannungsebene beziehen oder in die Spannungsebene einspeisen.

Es kann sinnvoll sein, wenn der Energiespeicher oder mindestens einer der Energielieferanten Blindleistung in die unterste Spannungsebene liefert, während gleichzeitig ein anderer Energieerzeuger oder ein anderer Energiespeicher Blindleistung aus der Spannungsebene bezieht. Dies hängt von der geographischen Nähe des Energieerzeugers bzw. -lieferanten zu den Verbrauchern ab. Ebenfalls zweckmäßig ist es, wenn der Energiespeicher oder mindestens einer der Energieerzeuger Blindleistung in eine der zwei untersten Spannungsebenen liefert, während gleichzeitig ein anderer Energieerzeuger oder ein anderer Energiespeicher Blindleistung aus einer der zwei Spannungsebenen bezieht.

Ebenso kann eine mögliche Betriebsführung vorsehen, dass bei Vorliegen eines maximal zulässigen Blindleistungsübergangs und einer maximal möglichen Blindleistungslieferung des mindestens einen Energielieferanten sowie gegebenenfalls des vorgesehenen Energiespeichers und eines am Rand des vorgebbaren Spannungsbereichs gemessenen Spannungswertes ein Signal generiert wird, das eine Leistungsreduzierung des Energielieferanten zugunsten einer Blindleistungslieferung zur Folge hat. Der Wegfall von Leistung ist hier zugunsten einer Blindleistungskompensation in Kauf zu nehmen.

Nachfolgend wird ein Ausführungsbeispiel der Erfindung anhand einer Zeichnung näher erläutert. Darin zeigen:
- Fig. 1: ein Regelschema eines Wechselrichters einer Solaranlage zur Einstellung eines cos phi Werts über die Ausgangsspannung;
- Fig. 2: eine schematische Darstellung von drei Versorgungsebenen mit ihren beteiligten Komponenten;
- Fig. 3: eine Ringleitung mit Versorgungstransformator und Netzverknüpfungspunkten;

In Fig. 1 ist ein Regelschema des cos phi über die Wechselrichterausgangs-spannung U dargestellt, das prinzipiell bei moderneren PV-Anlagen vorteilhaft zur Anwendung kommt und das das Verständnis der sich anschließenden Beschreibung erleichtern soll.

Es sind zwei Grenzwerte Uₘᵢₙ und Uₘₐₓ vorgesehen, die generell nicht unter- bzw. überschritten werden sollen. Zwischen diesen Randgrenzwerten Uₘᵢₙ und Uₘₐₓ liegt ein linearer Regelbereich A, der von zwei Regelgrenzwerten U_{regel min} und U_{regel max} eingegrenzt ist. In diesem Bereich A wird die Anlage cos phi neutral gefahren und es wird reine Wirkleistung in das Versorgungsnetz eingespeist. Liegt der Betriebspunkt des Wechselrichters mit seiner Ausgangsspannung U im Bereich B zwischen Uₘᵢₙ und U_{regel min}, so wird zusätzlich Blindleistung VAr (Ampere reactive) in das Versorgungsnetz geliefert.

Analog wird bei einem Betriebspunkt des Wechselrichters mit einer Ausgangsspannung U im Bereich C zwischen Uₘₐₓ und U_{regel max} zusätzlich zur Leistungseinspeisung Blindleistung VAr dem Versorgungsnetz entnommen. Der Betriebspunkt ist dabei über Halbleiterelemente oder -schalter, insbesondere IGBT's (Insulated-Gate Bipolar Transistor), im Wechselrichter, insbesondere mittels eines sogenannten MPP-Reglers (Maximum Power Point), einstellbar. An den beiden oberen und unteren Grenzwerten gibt es noch Notfallflanken, auf die hier nicht weiter eingegangen werden soll.

Je nach Betriebspunkt ergibt sich also unter Umständen ein Blindleistungsbezug aus dem Netz, was generell eine Tendenz zur Spannungssenkung der Netzspannung bedeutet, oder auch eine Blindleistungseinspeisung, was gleichbedeutend ist mit einer Spannungsanhebung auf der Versorgungsebene, an die der Wechselrichter angeschlossen ist.

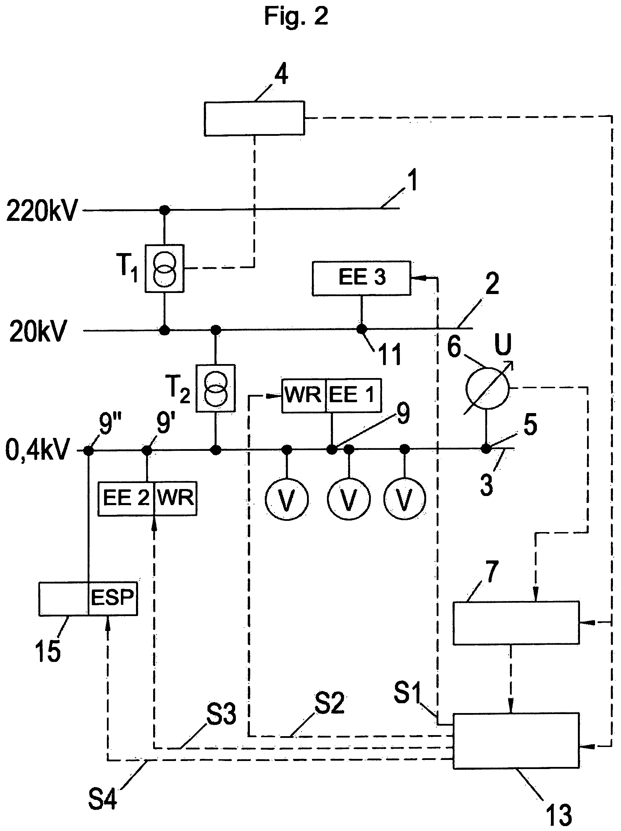

In Fig. 2 sind drei Spannungs- oder Versorgungsebenen 1, 2, 3 eines elektrischen Energieversorgungsnetzes dargestellt. Bei der Versorgungsebene 1 handelt es sich um eine Hochspannungsebene mit 220 kV, bei der Versorgungsebene 2 um eine Mittelspannungsebene mit 20 kV und bei der Versorgungsebene 3 um eine Niederspannungsebene mit 400 Volt. Ein erster Transformator T1 spannt die Hochspannung herunter auf die Mittelspannung. Ein zweiter Transformator T2 spannt die Mittelspannung herunter auf die Niederspannung. An den ersten Transformator T1 ist eine Messeinrichtung 4 angeschlossen, die am ersten Transformator T1 den Blindleistungsübergang zwischen den beiden oberen Spannungsebenen 1, 2 erfasst. Der ermittelte Wert des Blindleistungsübergangs wird an eine Recheneinheit 7 übermittelt, auf die nachfolgen näher eingegangen wird. Das Ziel des Blindleistungsmanagements der Versorgungsebene 1 ist es, an dieser Stelle einen vorgebbaren cos phi Grenzwert, z. B. einen cos phi von 0,95, nicht zu unterschreiten.

An einem ersten Netzverknüpfungspunkt 5 wird mittels eines Spannungsmessgeräts 6 die an diesem Punkt herrschende Spannung auf der Niederspannungsebene 3 gemessen. Der entsprechende Messwert wird über eine Signalleitung an die Recheneinrichtung 7 weitergeleitet. In Fig. 2 sind Signalleitungen mit gestrichelten Linien dargestellt, während und Energieflussleitungen mit ausgezogenen Linien dargestellt sind.

Ein erster, nachfolgend auch als Energielieferant bezeichneter Energieerzeuger EE1 ist über einen anderen Netzverknüpfungspunkt 9 mit der untersten Spannungsebene 3 verbunden. Der erste Energieerzeuger EE1 ist eine Photovoltaikanlage (PV-Anlage) mit einem den erzeugten Gleichstrom in einen Wechselstrom transformierenden Wechselrichter WR. Die Photovoltaikanlage kann eine gewöhnliche Dachanlage sein, von denen eine Vielzahl (dargestellt ist lediglich ein zweiter Energielieferant bzw. Energieerzeuger EE2) über eine entsprechende Vielzahl von anderen Netzverknüpfungspunkten 9' an die unterste Spannungsebene 3 angeschlossen sind.

Der erste Netzverknüpfungspunkt 5, an welchem das Spanungsmessgerät 6 angeschlossen ist, kann dabei auch gleichzeitig ein Einspeisepunkt für einen der Energieerzeuger EE sein. Zusätzlich zum oder anstelle des ersten Energieerzeuger(s) EE1 kann über einen zweiten Netzverknüpfungspunkt 11, der sich auf der mittleren Spannungsebene 2 befindet, ein weiterer Energieerzeuger bzw. -lieferant EE3 mit der mittleren Spannungsebene 2 verbunden sein. Den Energieerzeugern EE1 bis EE3 ist dabei gemeinsam, dass diese auf Abruf oder Anforderung eine Blindleistungsanforderung bedienen können. Das heißt, dass die Energieerzeuger EE1 bis EE3 technisch in der Lage sind, Blindleistung (VAr) über den Verknüpfungspunkt 9, 9' an die betreffende Versorgungsebene 2, 3 abzugeben oder zu beziehen.

Die Recheneinrichtung 7 ermittelt die Höhe der Blindleistungsanforderung, die erforderlich ist, um in Abhängigkeit des vom Spannungsmessgerät 6 ermittelten Spannungswerts die auf der untersten Spannungsebene 3 ermittelte Spannung innerhalb eines vorgebbaren Spannungsbereichs zu halten. Dabei ist die Einhaltung des maximal zulässigen Werts des am ersten Transformator T1 stattfindenden Blindleistungsübergangs zu respektieren. Ist die gemessene Spannung U am ersten Netzverknüpfungspunkt 5 zum Beispiel nahe der unteren Grenze des vorgegebenen Spannungsbereichs, so ist der Spannungsebene 3 Blindleistung VAr zuzuführen, um die Spannung anzuheben.

Im umgekehrten Fall, wenn die gemessene Spannung nahe der oberen Grenze des Spannungsbereichs ist, muss Blindleistung VAr der Spannungsebene entnommen werden. Die Größe der zu beziehenden oder zu entnehmenden Blindleistung VAr wird in der Recheneinrichtung 7 ermittelt und an eine Regel- und Steuereinheit 13 weitergegeben. Diese generiert eine oder mehrere Ausgangssignale S1 bis S3, die das für den Blindleistungsbezug oder die Blindleistungslieferung verantwortliche Mittel der Energieerzeuger EE1 bis EE3 beeinflusst. Dieses Mittel ist bei Photovoltaikanlagen als Energieerzeuger EE der diesem inhärente Wechselrichter WR, der über eine entsprechende Ansteuerung der verbauten IGBT's in der Lage ist, im Rahmen seiner Nennleistung auch Blindleistung VAr zu erzeugen oder aufzunehmen. Bei mechanischen Wechselrichtern WR ist dies die Einstellung des Erregerstroms der beteiligten Maschinen.

In Fig. 2 ist zudem ein Energiespeicher 15 gezeigt, der an einer der Spannungsebenen 1 bis 3 über einen eigenen Netzverknüpfungspunkt 9" vorgesehen sein kann, um Blindleistung VAr aus der Spannungsebene 3 zu beziehen oder in die Spannungsebene 3 einzuspeisen. Vorliegend ist der Energiespeicher 15 an der untersten Spannungsebene 3 angeschlossen, wobei dieser auch an der mittleren Spannungsebene 2 vorgesehen sein kann. Der Energiespeicher 15 bezieht sein Steuersignal S4 ebenfalls von der Regel- und Steuereinheit 13. Dabei besteht die Möglichkeit, dass der Energiespeicher 15 oder mindestens einer der Energieerzeuger EE1 oder EE2 Blindleistung VAr in die untere Spannungsebene 2 liefert, während gleichzeitig ein anderer Energieerzeuger EE3 oder ein anderer Energiespeicher Blindleistung aus einer anderen Spannungsebene bezieht. Der Energiespeicher 15 kann eine an sich bekannte Vorrichtung sein, wie z. B. eine Batteriebank, ein Pumpspeicherkraftwerk oder eine Kombination verschiedener Arten von Energiespeichern.

In Fig. 3 ist eine Ringleitung 17 auf der Mittelspannungsebene 2 gezeigt, an der eine Anzahl von Ortschaften A bis K angeschlossen sind, in denen die Spannung über weitere Transformatoren, von denen nur der der Ortschaft D gezeigt und mit dem Bezugszeichen 18 versehen ist, auf die Niederspannungsebene 3 gebracht wird. In den Ortschaften A, C und H sind größere Photovoltaikanlagen aufgestellt, die über zugeordnete Netzverknüpfungspunkte mit der Ringleitung 17 verbunden sind. Die Ringleitung 17 wird seitens der Hochspannungsebene 1 über zwei Versorgungstransformatoren 19 und 21 mit elektrischer Energie versorgt.

Zur Illustration eines Anwendungsbeispiels soll davon ausgegangen werden, dass der Transformator 19 einer Wartung unterzogen und vom Netz genommen wird. Dies hätte zur Folge, dass den vom verbleibenden Versorgungstransformator 21 gespeisten Ortschaften E und D nur noch ein Spannungsniveau am unteren Ende der Nennspannung von z. B. 20kV zur Verfügung steht. Als unteres Ende wird z. B. ein Wert von 3% unter der Nennspannung, also vorliegend von 19,4kV angesehen. Die Zuschaltung einer schweren Maschinenanlage in der Ortschaft F würde folglich zu einem Unterschreiten der Mindestspannung und zu einem Flackern der Lichter in den Ortschaften E und D führen. Dieser drohende Zustand wird über ein Spannungsmessgerät 6 erkannt, welches an einem Netzverknüpfungspunkt 5 angeschlossen ist, über welchen die Ortschaft D mit elektrischer Energie versorgt wird.

Der Netzverknüpfungspunkt 5 befindet sich dabei auf der Sekundär- oder Niederspannungsseite des weiteren Transformators 18 der Ortschaft D, also auf der 0,4kV Spannungsebene 3. Der gemessene Spannungswert wird einer Recheneinrichtung 7 zugeführt, die daraus einen Wert an Blindleistungslieferung zur Anhebung der Spannung am Netzverknüpfungspunkt 5 berechnet. Diese Anforderung wird an eine Regel- und Steuereinheit 13 weitergeleitet, die daraus ein Signal S bildet, das an mindestens einen Energielieferanten EE geleitet wird. Im Ausführungsbeispiel ist dies die Photovoltaikgroßanlage in der Ortschaft C, die dem gewünschten geographischen Punkt der Spannungsanhebung, also der Ortschaft D, am nächsten liegt. Die dortige Photovoltaikanlage wird von der Regel- und Steuereinheit 13 dann derart eingestellt, dass momentan nicht zur Sonnenenergieumwandlung benötigte, also freie Leistungskapazitäten des Wechselrichters WR zur Lieferung von Blindleistung herangezogen werden kann. Der mögliche Lieferbeitrag entspricht dabei der Differenz zwischen der erzeugten Leistung P und der Nennleistung des Wechselrichters WR. Sollte der dort befindliche Energieerzeuger EE gerade seine Nennleistung in das Netz einspeisen, so dass keine zusätzliche Blindleistung VAr eingespeist werden kann, so ist es möglicherweise wünschenswert, die Leistung P zugunsten einer Blindleistungslieferung zu reduzieren. Bei Vorliegen von mehreren Energielieferanten EE sollte derjenige zur Leistungsreduzierung veranlasst werden, dessen Beitrag zur Spannungsstabilisierung am effektivsten ist, also am gezeigten Beispiel die Photovoltaikanlage in der Ortschaft C.

In der Regel gilt, dass der Energieerzeuger EE mit dem effektivsten Beitrag derjenige ist, der der spannungssensibelsten Stelle am nächsten oder am Ende einer Stichleitung oder nahe der Mitte auf einer Ringleitung liegt. Dabei ist die spannungssensibelste Stelle durch eine prozentuale Abweichung in Bezug zur Nennspannung der betrachteten Versorgungsebene definiert. Die spannungssensibelste Stelle ist abhängig von den Gegebenheiten vor Ort, also welche Industrieanlagen in welchen Ortschaften A bis K stehen und/oder welche Leitungsquerschnitte verlegt sind, etc. Dabei wird diese Stelle über einen längeren Betriebszeitraum durch Beobachten der gemessenen Spannungswerte ermittelt.

Obwohl der Übersichtlichkeit halber nur ein einziger Netzverknüpfungspunkt 5 mit dem angeschlossenen Spannungsmessgerät 6 gezeigt ist, können eine Vielzahl von Spannungsmessgeräten 6 an unterschiedlichen Stellen auf der betrachteten Netzebene 2 und/oder 3 vorhanden sein, um ein Spannungsbild des gesamten Netzbereichs zu erfassen und daraus den Betrag der Blindleistungsanforderung und den geeignetsten Energieerzeuger EE zur Blindleistungslieferung zu bestimmen. Dabei kann nicht nur eine Blindleistungslieferung zur Anheben der Spannung erforderlich sein. Auch kann an anderer Stelle im Nerz ebenso ein Blindleistungsbezug zur Senkung der Spannung sinnvoll sein.

Es ist üblich, bei der Wartung des vom Netz genommenen Transformators 19 zur Stabilisierung der Spannung auf dem Ring 17 gleichzeitig das Übersetzungsverhältnis des verbleibenden Transformators 21 zu verändern. Die dann höhere Spannung an dessen Netzeinspeisepunkt wird bis zur Ortschaft D durchgeschleift und wirkt der drohenden Spannungsunterschreitung unter den Mindestwert entgegen. Dadurch kann es bei den dem Transformator 21 benachbarten Ortschaften A und K zu einer unerwünschten Spannungserhöhung kommen, die über einen Blindleistungsbezug durch den in der Ortschaft A angesiedelten Energieerzeuger EE kompensiert werden kann.

Sollte sich an den weiteren Transformator 18 eine Stichleitung anschließen, so wird das Spannungsmessgerät 6 zweckmäßigerweise am Ende der Stichleitung, vorzugsweise am Netzverknüpfungspunkt des letzten Verbrauchers, platziert, zumal dort die geringste Spannung zu erwarten ist.

### Bezugszeichenliste

- 1: oberste Spannungsebene
- 2: mittlere Spannungsebene
- 3: untere Spannungsebene
- 4: Blindleistungsmesseinrichtung
- 5: erster Netzverknüpfungspunkt
- 6: Spannungsmessgerät
- 7: Recheneinrichtung
- 9,9',9": Netzverknüpfungspunkt
- 11: zweiter Netzverknüpfungspunkt
- 13: Regel- und Steuereinheit
- 15: Energiespeicher
- 17: Ringleitung
- 18: Transformator der Ortschaft D
- 19: erster Versorgungstransformator
- 21: zweiter Versorgungstransformator
- EE: Energieerzeuger
- V: Verbraucher
- P: Leistung
- VAr: Blindleistung
- T1: erster Transformator
- T2: zweiter Transformator
- WR: Wechselrichter
- A-K: Ortschaften
- S,S1,S2,S3,S4: Ausgangssignal

## Patentansprüche

1. Vorrichtung zum Betrieb mindestens eines Energieerzeugers (EE1, EE2, EE3) in einem elektrischen Energieversorgungsnetz mit mindestens drei verschieden hohen Spannungsebenen (1, 2, 3) für die Versorgung von Verbrauchern mit elektrischer Energie, von denen die oberen beiden Spannungsebenen über einen ersten Transformator (T1) und die unteren beiden Spannungsebenen über einen zweiten Transformator (T2) miteinander verbunden sind, wobei der Energieerzeuger (EE1, EE2, EE3) über einen Netzverknüpfungspunkt (5, 9, 9', 11) mit der unteren Spannungsebene (3) oder mit der mittleren Spannungsebene (2) verbunden ist, **gekennzeichnet durch**
- eine Messeinrichtung (4), die den Blindleistungsübergang zwischen den beiden oberen Spannungsebenen (1, 2) am ersten Transformator (T1) erfasst,
- ein Spannungsmessgerät (6), das die Spannung an einem ersten Netzverknüpfungspunkt (5) der unteren Spannungsebene (3) ermittelt,
- eine Recheneinrichtung (7), welche die Höhe einer vom Energieerzeuger (EE1, EE2, EE3) zu bedienenden Blindleistungsanforderung in Abhängigkeit des vom Spannungsmessgerät (6) ermittelten Spannungswerts errechnet, um die auf der untersten Spannungsebene (3) ermittelte Spannung innerhalb eines vorgebbaren Spannungsbereichs zu halten, und
- durch eine Regel- und Steuereinheit (13), die anhand der errechneten Blindleistungsanforderung ein Mittel (WR) des Energieerzeugers (EE1, EE2, EE3) für einen Blindleistungsbezug oder eine Blindleistungslieferung ansteuert.

2. Vorrichtung nach Anspruch 1, wobei die Regel- und Steuereinrichtung (13) einen Regelalgorithmus beinhaltet, der den Blindleistungsübergang unterhalb eines vorgegebenen Grenzwerts hält.

3. Vorrichtung nach Anspruch 1 oder 2, mit einem an eine der Spannungsebenen (1, 2, 3) angeschlossener Energiespeicher (15), der auf Anforderung der Recheneinrichtung (7) Leistung (P) aus der betreffenden Spannungsebene (1, 2, 3) bezieht oder in die Spannungsebene (1, 2, 3) einspeist.

4. Vorrichtung nach einem der Ansprüche 1 oder 2, mit einem an eine der Spannungsebenen (1, 2, 3) angeschlossenen Energiespeicher (15), der Blindleistung (VAr) aus der betreffenden Spannungsebene (1, 2, 3) bezieht oder in die Spannungsebene (1, 2, 3) einspeist.

5. Vorrichtung nach Anspruch 1, wobei das Mittel elektronische Bauteile eines Wechselrichters (WR), insbesondere IGBT's, umfasst.

6. Verfahren zum Betrieb mindestens eines Energieerzeugers (EE1, EE2, EE3) in einem elektrischen Energieversorgungsnetz mit mindestens drei verschieden hohen Spannungsebenen (1, 2, 3) für die Versorgung von Verbrauchern mit elektrischer Energie, von denen die oberen beiden Spannungsebenen (1, 2) über einen ersten Transformator (T1) und die unteren beiden Spannungsebenen (2, 3) über einen zweiten Transformator (T2) miteinander verbunden sind, wobei der Energieerzeuger (EE1, EE2, EE3) über einen Netzverknüpfungspunkt (5, 9, 9', 11) mit der unteren Spannungsebene (3) oder mit der mittleren Spannungsebene (2) verbunden ist,
- wobei ein Blindleistungsübergang zwischen den beiden oberen Spannungsebenen (1, 2) an den diese verbindenden ersten Transformator (T1) erfasst wird,
- wobei die Spannung an einem ersten Netzverknüpfungspunkt (5) der untersten Spannungsebene (3) ermittelt wird,
- wobei die Höhe einer vom Energieerzeuger (EE1, EE2, EE3) zu bedienenden Blindleistungsanforderung in Abhängigkeit des ermittelten Spannungswerts errechnet wird, um die auf der untersten Spannungsebene (3) ermittelte Spannung innerhalb eines vorgebbaren Spannungsbereichs zu halten, und
- wobei anhand der errechneten Blindleistungsanforderung ein Mittel (WR) des Energieerzeugers (EE1, EE2, EE3) für einen Blindleistungsbezug oder eine Blindleistungslieferung angesteuert wird.

7. Verfahren nach Anspruch 6, bei dem bei Vorliegen von mehreren Energieerzeugern (EE1, EE2, EE3) derjenige zur Leistungsreduzierung veranlasst wird, dessen Beitrag zur Spannungsstabilisierung am effektivsten ist.

8. Verfahren nach Anspruch 6 oder 7,
- wobei die Betriebsführung eines Wechselrichters (WR) als Mittel des Energieerzeugers (EE1, EE2, EE3) für einen Blindleistungsbezug bzw. eine Blindleistungslieferung durch die dem Wechselrichters (WR) inhärente Regelung auf den maximalen Leistungspunkt (MPP) bei Photovoltaik- oder Windanlagen beibehalten wird, und
- wobei der Wechselrichter (WR) zusätzlich eine solche Blindleistungsmenge (VAr) in eine Versorgungsebene einspeist oder aus dieser bezieht, die maximal der Differenz der aktuell gelieferten Leistung (P) zur Nennleistung des Wechselrichters (WR) entspricht.

9. Verfahren nach Anspruch 6, 7 oder 8, wobei Blindleistung (VAr) aus einem Energiespeicher (15) oder von mindestens einem der Energieerzeuger (EE1, EE2, EE3) in eine der zwei unteren Spannungsebenen (2, 3) geliefert wird, während gleichzeitig Blindleistung (VAr) von einem anderen Energieerzeuger (EE1, EE2, EE3) aus einer der zwei unteren Spannungsebenen (2, 3) bezogen wird.

10. Verfahren nach einem der Ansprüche 6 bis 9, wobei von der Regel- und Steuereinheit (13) bei Vorliegen eines maximal zulässigen Blindleistungsübergangs oder einer maximal möglichen Blindleistungslieferung oder eines maximal möglichen Blindleistungsbezugs des mindestens einen Energieerzeugers (EE1, EE2, EE3) und gegebenenfalls des Energiespeichers (15) sowie bei Vorliegen eines am Rand des vorgebbaren Spannungsbereichs gemessenen Spannungswertes ein Signal generiert wird, das eine Leistungsreduzierung des Energieerzeugers (EE1, EE2, EE3) zugunsten einer Blindleistungslieferung oder eines Blindleistungsbezug zur Folge hat.

## Claims

1. Device for operating at least one energy generator (EE1, EE2, EE3) in an electric energy supply network having at least three voltage levels (1, 2, 3) of different heights for supplying consumers with electrical energy, the upper two voltage levels of which are connected to each other via a first transformer (T1) and the lower two voltage levels via a second transformer (T2), wherein the energy generator (EE1, EE2, EE3) is connected to the lower voltage level (3) or to the central voltage level (2) via a network linking point (5, 9, 9', 11), **characterised by**
- a measuring device (4), which detects the reactive power transfer between the two upper voltage levels (1, 2) on the first transformer (T1),
- a voltage measuring apparatus (6), which determines the voltage on a first network linking point (5) of the lower voltage level (3),
- a computing device (7), which calculates the amount of a reactive power demand to be served by the energy generator (EE1, EE2, EE3) depending on the voltage value determined by the voltage measuring apparatus (6) in order to maintain the voltage determined on the lowermost voltage level (3) within a predeterminable voltage range, and
- a regulating and control unit (13), which controls a means (WR) of the energy generator (EE1, EE2, EE3), with the aid of the calculated reactive power demand, for a reactive power draw or a reactive power delivery.

2. Device according to claim 1, wherein the regulating and control device (13) includes a regulating algorithm which maintains the reactive power transfer below a predetermined threshold value.

3. Device according to claim 1 or 2, having an energy accumulator (15) attached to one of the voltage levels (1, 2, 3), which, on the request of the computing device (7), draws power (P) from the relevant voltage level (1, 2, 3) or feeds into the voltage level (1, 2, 3).

4. Device according to one of claims 1 or 2, having an energy accumulator (15) attached to one of the voltage levels (1, 2, 3), which draws reactive power (VAr) from the relevant voltage level (1, 2, 3) or feeds into the voltage level (1, 2, 3).

5. Device according to claim 1, wherein the means comprises electronic components of an inverter (WR), in particular IGBTs.

6. Method for operating at least one energy generator (EE1, EE2, EE3) in an electrical energy supply network having at least three voltage levels (1, 2, 3) of different heights for supplying consumers with electrical energy, the upper two voltage levels (1, 2) of which are connected to each other via a first transformer (T1) and the lower two voltage levels (2, 3) via a second transformer (T2), wherein the energy generator (EE1, EE2, EE3) is connected to the lower voltage level (3) or to the central voltage level (2) via a network linking point (5, 9, 9', 11'),
- wherein a reactive power transfer between the two upper voltage levels (1, 2) to the first transformer (T1) connected to these is detected,
- wherein the voltage is determined at a first network linking point (5) of the lowermost voltage level (3),
- wherein the amount of a reactive power demand served by the energy generator (EE1, EE2, EE3) is calculated depending on the determined voltage value, in order to maintain the voltage determined on the lowermost voltage level inside a predeterminable voltage level (3), and
- wherein a means (WR) of the energy generator (EE1, EE2, EE3) for a reactive power draw or a reactive power delivery is controlled by means of the calculated reactive power demand.

7. Method according to claim 6, in which, in the event that several energy generators (EE1, EE2, EE3) are present, the one that is induced to reduce power is the one whose contribution is the most effective for stabilising the voltage.

8. Method according to claim 6 or 7,
- wherein the management of an inverter (WR) as a means of the energy generator (EE1, EE2, EE3) is maintained at the maximum power point (MPP) in photovoltaic or wind-power systems for a reactive power draw or a reactive power delivery by the regulator inherent to the inverter (WR), and
- wherein the inverter (WR) additionally feeds such a reactive power amount (VAr) into a supply level or draws from this, which maximally corresponds to the difference of the currently delivered power (P) for the nominal power of the inverter (WR).

9. Method according to claim 6, 7, or 8, wherein reactive power (VAr) is delivered from a energy accumulator (15) or by at least one of the energy generators (EE1, EE2, EE3) into one of the two lower voltage levels (2, 3), while, at the same time, reactive power (VAr) is drawn from one of the two lower voltage levels (2, 3) by a different energy generator (EE1, EE2, EE3).

10. Method according to one of claims 6 to 9, wherein, in the event of a maximum permissible reactive power transfer or a maximum possible reactive power delivery or a maximum possible reactive power draw of the at least one energy generator (EE1, EE2, EE3) and, where applicable, of the energy accumulator (15) being present as well as in the event of a voltage value measured on the edge of the predeterminable voltage range being present, a signal is generated by the regulating and control unit (13), said signal resulting in a power reduction of the energy generator (EE1, EE2, EE3) in favour of a reactive power delivery or a reactive power draw.

## Revendications

1. Dispositif pour faire fonctionner au moins un générateur d'énergie (EE1, EE2, EE3) dans un réseau d'alimentation en énergie électrique ayant au moins trois niveaux de tension (1, 2, 3) de valeurs différentes pour l'alimentation en énergie électrique de consommateurs, dont les deux niveaux de tension supérieurs sont reliés entre eux par un premier transformateur (T1) et les deux niveaux de tension inférieurs sont reliés entre eux par un deuxième transformateur (T2), le générateur d'énergie (EE1, EE2, EE3) étant relié par l'intermédiaire d'un point de connexion réseau (5, 9, 9', 11) au niveau de tension inférieur (3) ou au niveau de tension moyen (2), **caractérisé par**
- un dispositif de mesure (4) qui mesure le transfert de puissance réactive entre les deux niveaux de tension supérieurs (1, 2) au niveau du premier transformateur (T1),
- un voltmètre (6) qui détermine la tension en un premier point de connexion réseau (5) du niveau de tension inférieur (3),
- un dispositif de calcul (7) qui calcule le niveau d'un besoin en puissance réactive à fournir par le générateur d'énergie (EE1, EE2, EE3) en fonction de la valeur de tension déterminée par le voltmètre (6), pour maintenir la tension déterminée au niveau de tension le plus bas (3) dans une plage de tension pouvant être prédéfinie, et
- une unité de régulation et de commande (13) qui, sur la base du besoin en puissance réactive calculé, commande un moyen (WR) du générateur d'énergie (EE1, EE2, EE3) pour consommer ou produire de la puissance réactive.

2. Dispositif selon la revendication 1, dans lequel le dispositif de régulation et de commande (13) comprend un algorithme de régulation qui maintient le transfert de puissance réactive sous une valeur limite prédéterminée.

3. Dispositif selon la revendication 1 ou 2, comprenant un accumulateur d'énergie (15) qui est relié à l'un des niveaux de tension (1, 2, 3) et qui, à la demande du dispositif de calcul (7), consomme de la puissance (P) du niveau de tension (1, 2, 3) correspondant ou qui en produit dans le niveau de tension (1, 2, 3).

4. Dispositif selon l'une des revendications 1 ou 2, comprenant un accumulateur d'énergie (15) qui est relié à l'un des niveaux de tension (1, 2, 3) et qui consomme de la puissance réactive (VAr) du niveau de tension (1, 2, 3) correspondant ou qui en produit dans le niveau de tension (1, 2, 3).

5. Dispositif selon la revendication 1, dans lequel le moyen comprend des composants électroniques d'un onduleur (WR), en particulier des IGBT.

6. Procédé pour faire fonctionner au moins un générateur d'énergie (EE1, EE2, EE3) dans un réseau d'alimentation en énergie électrique ayant au moins trois niveaux de tension (1, 2, 3) de valeurs différentes pour l'alimentation en énergie électrique de consommateurs, dont les deux niveaux de tension supérieurs (1, 2) sont reliés entre eux par un premier transformateur (T1) et les deux niveaux de tension inférieurs (2, 3) sont reliés entre eux par un deuxième transformateur (T2), le générateur d'énergie (EE1, EE2, EE3) étant relié par l'intermédiaire d'un point de connexion réseau (5, 9, 9', 11) au niveau de tension inférieur (3) ou au niveau de tension moyen (2),
- un transfert de puissance réactive entre les deux niveaux de tension supérieurs (1, 2) étant mesuré au niveau du premier transformateur (T1) reliant ceux-ci,
- la tension étant déterminée en un premier point de connexion réseau (5) du niveau de tension le plus bas (3),
- le niveau d'un besoin en puissance réactive à fournir par le générateur d'énergie (EE1, EE2, EE3) étant calculé en fonction de la valeur de tension déterminée, pour maintenir la tension déterminée au niveau de tension le plus bas (3) dans une plage de tension pouvant être prédéfinie, et
- un moyen (WR) du générateur d'énergie (EE1, EE2, EE3) étant commandé sur la base du besoin en puissance réactive calculé pour une consommation de puissance réactive ou une production de puissance réactive.

7. Procédé selon la revendication 6 dans lequel, dans le cas de plusieurs générateurs d'énergie (EE1, EE2, EE3) en présence, le générateur d'énergie dont la contribution à la stabilisation de tension est la plus efficace est conduit à réduire la puissance.

8. Procédé selon la revendication 6 ou 7, dans lequel
- la gestion du pilotage d'un onduleur (WR) en tant que moyen du générateur d'énergie (EE1, EE2, EE3) pour une consommation de puissance réactive ou une production de puissance réactive est maintenue par la régulation inhérente à l'onduleur (WR) au point de puissance maximale (MPP) dans les installations photovoltaïques ou éoliennes, et
- l'onduleur (WR) en outre produit ou consomme dans un niveau d'alimentation une quantité de puissance réactive (VAr) qui correspond au plus à la différence entre la puissance actuellement fournie (P) et la puissance nominale de l'onduleur (WR).

9. Procédé selon la revendication 6, 7 ou 8, dans lequel de la puissance réactive (VAr) est fournie par un accumulateur d'énergie (15) ou par au moins un des générateurs d'énergie (EE1, EE2, EE3) dans l'un des deux niveaux de tension inférieurs (2, 3), tandis que de la puissance réactive (VAr) est consommée simultanément par un autre générateur d'énergie (EE1, EE2, EE3) d'un des deux niveaux de tension inférieurs (2, 3).

10. Procédé selon l'une des revendications 6 à 9, dans lequel un signal est généré par l'unité de régulation et de commande (13) en cas d'un transfert de puissance réactive maximal admissible ou d'une production de puissance réactive maximale admissible ou d'une consommation de puissance réactive maximale admissible par l'au moins un générateur d'énergie (EE1, EE2, EE3) et, le cas échéant, par l'accumulateur d'énergie (15), ainsi qu'en cas d'une valeur de tension mesurée sur les bords de la plage de tension pouvant être prédéfinie, lequel signal entraîne une réduction de puissance du générateur d'énergie (EE1, EE2,EE3) au profit d'une production ou d'une consommation de puissance réactive.
